# EUROPEAN PATENT SPECIFICATION

(11) **EP 1 614 356 B1**
(45) Date of publication and mention of the grant of the patent: **22.12.2010**
(21) Application number: 04722647.7
(22) Date of filing: 23.03.2004
(51) Int. Cl.: A23L 1/00

(54) **METHOD OF POWDERING NONSUGAR COMPONENT**
VERFAHREN ZUM PULVERISIEREN EINER NICHT AUS ZUCKER BESTEHENDEN KOMPONENTE
PROCEDE DE PULVERISATION DE COMPOSANT AUTRE QUE LE SUCRE

(30) Priority: 26.03.2003 JP 2003086424
(43) Date of publication of application: 11.01.2006
(73) Proprietor: KABUSHIKI KAISHA HAYASHIBARA SEIBUTSU KAGAKU KENKYUJO, Okayama-shi, Okayama 700-0907 (JP)
(72) Inventor: KUBOTA, Michio c/o Kabushiki Kaisha Hayashibara, Okayama-shi, Okayama 700-0907 (JP); FUKUDA, Shigeharu c/o Kabushiki Kaisha Hayashibara, Okayama-shi, Okayama 700-0907 (JP); MIYAKE, Toshio c/o Kabushiki Kaisha Hayashibara, Okayama-shi, Okayama 700-0907 (JP)
(74) Representative: Daniels, Jeffrey Nicholas
(86) International application number: PCT/JP2004/003953
(87) International publication number: WO 2004/084650

(56) References cited:
- EP-A1- 1 582 105
- EP-A1- 1 588 627
- EP-A2- 0 606 753
- JP-A- 7 143 876
- JP-A- 2003 088 308

## Description

### TECHNICAL FIELD

The present invention relates to a method for powderizing non-saccharide ingredients into powdery compositions having a satisfactory ability of retaining and stabilizing aroma, color, particularly, flavor as well as having taste and appearance with high preference. Particularly, the present invention relates to a method for powderizing non-saccharide ingredients which comprises the steps of mixing the non-saccharide ingredients and a saccharide-derivative(s) of α,α-trehalose, and powderizing the resulting mixture; and powdery compositions prepared by the method.

### BACKGROUND ART

Recently, many attempts have been made that various non-saccharide ingredients in a liquid or paste form are powderized by reducing the moisture contents to improve the convenience for transporting or preserving. Particularly, accompanying with the advancement of our eating habit and its diversity, in the field of foods and beverages, the powderization of those is carried out for the purpose of keeping preferable flavor, color, solubility in water, functions, etc. for a long preservation period. Usually, for powderizing those non-saccharide ingredients, a method comprising the steps of admixing a base for the powderization such as a natural gummy substance of plant origin, starch, water-soluble cellulose derivatives, dextrins, starch syrup with low DE, maltose, etc. with those solution and powderizing the mixture by spray-drying (For example, refer to Japanese Patent Kokai Nos. 44695/81 and 14846/94). Also, to prepare powdery compositions of lipophilic flavors or functional ingredients, a method for drying the mixture of those ingredients, trehalose, an emulsifier, and water was proposed (for example, refer to Japanese Patent Kokai Nos. 107911/97 and 187249/97).

However, several types of powderized compositions, obtained by spray-drying with the above methods, have disadvantages with respect to their flavors and stabilities of functions. Powderized dextrins and starchy syrups with a low DE have some disadvantages of having a high viscosity, low water-solubility, and readiness of retrogradation. Some gummy substances have disadvantages of having viscosity and generating a bad smell (for example, refer to Japanese Patent Kokai Nos. 44695/81 and 14848/94). In the case of using a starchy syrup with a high DE or maltose as a base for powderization, they have disadvantages of easily adsorbing moisture and causing deterioration of coloring because of their reducibility. The development of a base, which can be stably used for powderizing foods without affecting taste, flavor, color, mouthfeel, etc., has been desired for applying to the present diversified eating habit.

While, the present applicant disclosed a composition comprising a saccharide-derivative(s) of α,α-trehalose in Japanese Patent Kokai Nos. 143876/95 and 73504/96, Japanese Patent No. 3182679 and Japanese Patent Kokai No. 2000-228980, etc. However, in those patent specifications, there are neither concrete description or suggestion on the fact that the saccharide-derivative (s) of α,α-trehalose is preferable as a base for powderizing non-saccharide ingredients, nor any method for powderizing non-saccharide ingredients using the saccharide- derivative(s).

EP0606753 discloses non-reducing saccharide-forming enzyme. The enzyme is obtainable from the culture of microorganisms such as *Rhizobium* sp. M-11 (FERM BP 4130) and *Arthrobacter sp*. Q36 (FERM BP-4316).

### DISCLOSURE OF INVENTION

The present invention provides a method for powderizing a hydrophobic non-saccharide ingredient(s) comprising the steps of: processing said hydrophobic non-saccharide ingredient(s) into a liquid or paste form by adding organic solvents; mixing said hydrophobic non-saccharide ingredient(s) with a saccharide composition comprising saccharide-derivative(s) of α,α-trehalose, wherein said saccharide composition comprises α-maltosyl α,α-trehalose in a content of 30 w/w% or higher; and powderizing the resulting mixture.

The first object of the present invention is to provide a method for powderizing non-saccharide ingredients which can keep their tissue, form, taste, flavor, color, texture, etc., and suppress the deterioration of quality such as inactivation of effective components and loss of nutritional components and the reducing of functions of the effective components during the preservation. The second object of the present invention is to provide powdery compositions obtainable by the method.

To solve the above objects, the present inventors have been investigated for a long time about the method for powderizing non-saccharide ingredients in terms of the use of saccharides. As a result, the present inventors found that various powderized compositions, powderized by incorporating a saccharide-derivative(s) of α,α-trehalose, into such as foods and beverages, cosmetics, medicated cosmetics, pharmaceuticals, commodities, feeds, pet-foods, sundries, agrochemicals, products of chemical industries, etc., have a satisfactory moisture-retaining activity but no hygroscopicity. The present inventors also found that those compositions have satisfactory characteristics of suppressing the reducing of their relish, such as their original tissue, form, taste, flavor, color, texture, etc., the deterioration of quality such as inactivation of effective components and loss of nutritional components, and the reducing of functions. The present inventors accomplished the present invention by establishing:
a method for powderizing non-saccharide ingredients, comprising the steps of; allowing a saccharide-derivative(s) of α,α-trehalose to incorporate into non-saccharide ingredients, drying the resulting mixture, and powderizing the resulting dried mixture;
powdery compositions produced by the method; and
a base for powderizing non-saccharide ingredients, comprising a saccharide-derivative(s) of α,α-trehalose as an effective ingredient(s).

### BEST MODE FOR CARRYING OUT THE INVENTION

The method for powderizing non-saccharide ingredients as referred to as in the present invention means a method for processing non-saccharide ingredients in a liquid or paste form into powdery products as defined in claim 1. The powderization method is not restricted to specific ones, and any methods can be used as far as they can dry and powderize non-saccharide ingredients in a liquid or paste form. The present invention includes a method for powderizing solids or granules, prepared by drying non-saccharide ingredients using a drum dryer, drying plate, oven, compressing grabulator, etc.; or those prepared by freeze-drying, using a powered mill. The present invention also includes a process for producing a powdery product by further coating the powder obtained by the above methods. In those methods, spray-drying method is particularly desirable because the drying and the powderizing can be done simultaneously.

Non-saccharide ingredients as referred to as in the present invention mean hydrophobic ingredients selected from the group consisting of foods and beverages, cosmetics, medicated cosmetics, pharmaceuticals, commodities, feeds, pet-foods, sundries, agrochemicals, and products of chemical industries, except for the ingredients consisted of saccharides. Non-saccharide ingredients include any materials, intermediates, and products prepared by processing materials, used for their production. The form of those is not restricted as far as it is in a liquid or paste, or that which can be processed into a liquid or paste. Such material includes, for example, processed stockbreedings, marine products or agricultural products; flavors, lipids, colorings, emulsifiers, functional substances, organic solvents, and agrichemical emulsions. The hydrophobic ingredients, which are insoluble or hardly soluble in water, such as essential oils, lipids, and fatty acids; are powderized after processed into products in a liquid or paste form by adding organic solvents (such as alcohols) to make into products in a liquid or paste form. Hydrophobic ingredients, which are insoluble or hardly soluble in water, include flavors, colorings, functional substances, etc. The non-saccharide ingredients as referred to as in the present invention include the ingredients that a part of them is composed with saccharides.

The processed stockbreedings, marine products or agricultural products as referred to as in the present invention are not restricted to specific products and those can be used as far as they are in a liquid or paste form, or those which can be processed into liquid or paste products. Such products include, for example, agricultural products such as juice of vegetables or fruits, homogenate of kale, vegetable extracts, soymilk, peptides, sesame paste, nuts paste, "*an*" (a sweet bean jam), gelatinized starch paste, wheat gluten, etc.; marine products such as urchin paste, oyster extract, sardine paste, etc.; stockbreedings such as lecitin, milk whey, egg, albumen, egg yolk, milk, fresh cream, yoghurt, butter, cheese, etc.; seasonings such as *"miso",* soy sauce, vinegar, *"mirin"* (a sweet sake), "*shin-mirin*" (a synthetic *mirin),* mayonnaise, dressing, bonito extract, meat extract, *"kombu"* (kelp) extract, chicken extract, beef extract, yeast extract, mushroom extract, licorice extract, stevia extract, those enzymatic hydrolyzates, seasonings for pickles, etc.; alcoholic drink such as sake, wine, brandy, whiskey, medicinal alcoholic drink, etc.; soft drinks such as green tea, powdered green tea, black tea, coffee, etc.; hydrous spices extracted from mint. "*wasabi*" (Japanese horse-radish), garlic, mustard, Japanese pepper, cinnamon, sage, laurel, pepper, citrus fruits, etc; and preservatives such as smoked liquids, fermented liquids, etc.

The flavors as referred to as in the present invention are not restricted to specific ones and include natural flavors, synthetic flavors, and their mixtures. Such flavors include those for perfume and foods, described in *"*Salshin-Keshouhin-kagaku-kaitei-Zouho II (Latest Science for Cosmetics, revised and supplemented II)". (published by The Yakuji Nippo Ltd., July, 10, 1992), *"*Saishin-Kesbouhin-gaku (Latest Cosmetology)", (published by Nanzando Co., Ltd., January, 18, 2002), *"*'Kouryou-no-Jiten (Dictionary of Flagrance)", (published by Asakura Shoten, August, 20, 1982), more concretely, essential oils from citrus fruits such as lime, orange, grapefruits, lemon, etc. ; essential oils originated from flowers and leaves of plants such as hop, salvia, chamomile, rosemary, eucalyptus, peppermint, various spices, spearmint, herb, etc.; lipophilic extract such as Kola nuts extract, coffee extract, tea extract, cocoa extract, spice extract, vanilla extract

The colorings as referred to as in the present invention are not restricted to specific ones, and natural colorings, synthesized colorings, and mixture thereof can be arbitrarily used. For example, colorings registered as food additives in food hygiene law, and those described in *"*Saishin-Keshouhin-Kagaku-Kaitei-Zouho II (Latest Science for Cosmetics, revised and supplemented II)", (published by The Yakuji Nippo Ltd., July, 10, 1992), "Saishin Keshouhingaku (Latest Cosmetology)", (published by Nanzando Co. , Ltd. in January, 18, 2002), *"*Kouryou-no-Jiten (Dictionary of Flagrance)", (published by Asakura Shoten. August, 20, 1982), can be used as a useful a material for foods and beverages, cosmetics, medicated cosmetics, and pharmaceuticals. More concretely, colorings from plants such as carotenoids, anthocyanins, anthraquinons, flavonids, porphyrins, diketones, betacyanins, flavins, and quinons; *"kankoso"* such as *kankoso* No.101 (Platonin), *kankoso* No.201 (Pionin), *kankoso* No.301 (Takanal), *kankoso* No.401, Plalumin, and Lumin; photosentizing dyes, edible colorings, tar color, ferric oxide, sodium copper chlorophylin; and colorings such as extracted from Maddar, Bixaceae, turmeric, paprika, red beet, sufflower, cape jasmine, saffron and *Monascus anka,* can be used.

The functional substances as referred to as in the present invention include substances having an amino group(s) such as amino acids, peptides, proteins, etc.: lymphokines such as α-, β-, and γ-interferons, TNF-α, TNF-β, macropharge migration inhibitory factor, colony-stimulating factor, transfer factor, and interleukin II; hormones such as insulin, growth hormone, prolactin, erythropoietin, follicle-stimulating hormone, etc.; biological preparations such as BCG vaccine, Japanese encephalitis vaccine, measles vaccine, live polio vaccine, small pox vaccine, tetanus toxoid, Trimeresurus antitoxin, human immunoglobulin, etc.; antibiotics such as penicillin, erythromycin, chloramphenicol, tetracycline, streptmycin, kanamycin sulfate, etc.; vitamins such as thiamin, riboflavin, L-ascorbic acid, cod liver oil, carotenoide, ergosterol, tocopherol, etc.; enzymes such as lipase, elastase, urokinase, protease, β-amylase, isoamylase, glucanase, lactase, etc.; extract such as ginseng extract, turtle extract, chlorella extract, aloe extract, propolis extract, mushroom extracts such as *Agaricus. Ganoderma lucidam, Phellinus linteus.* etc.; living microorganism such as virus, lactic acid bacterium, yeast, etc. ; polyphenols including flavonoids such as rutin, α-glycosyl rutin, narindin, α-glycosyl narindin, anthocyanidin and catechins such as catechin, epicatechin, epigallocatechin; hydrophilic or lipophilic vitamins, minerals, docosahexaenoic acid (DHA), eicosapentaenoic acid (EPA), fish oil comprising DHA and EPA. fatty acids such as linoleic acid, γ-linolenic acid, α-linolenic acid, etc.; and others such as evening primrose oil, Borage oil, lecithin, octacosanol, rosemary, sage, γ-oryzanol, β-carotene, palm carotene, perilla oil, chitin, and chitosan. These functional substances include other effective ingredients comprised in pharmaceuticals and materials for functional nutritional foods.

The emulsifiers as referred to as in the present invention mean any ingredients having an emulsifying activity, and are usually selected from various emulsifiers used for foods and beverages, pharmaceuticals, cosmetics, products of chemical industries, etc., according to the uses of the powderized compositions. For example, fatty acid-monoglyceride, fatty acid-diglyceride, fatty acid-triglyceride, propyleneglycol-fatty acid ester, sucrose-fatty acid ester, polyglycerin-fatty acid ester, lecithin, sorbitan-fatty acid ester, fatty acid salts, alkyl-sulf uric acid ester, alkylamine salts, quaternary ammonium salts, alkylbetaine, Quillaja extract, gum Arabic, tragacanth gum, guar gum, karaya gum, xanthan gum, pectin, pullulan, cyclodextrin, alginic acid and its salts, carrageenan, gelatin, casein, starch, and starch-derivatives can be used as the emulsifiers. The amount of the emulsifiers used in the present invention is not strictly restricted and can be changed in a broad range depending on the kinds of the emulsifiers. The amount of the emulsifier is preferably in the range of, usually, about 0.01 to about 50 parts by weight, desirably, about 0.1 to about 10 parts by weight, to one part by weight of a composition to be powderized. In the case of powderizing an emulsifier only, it can be optionally powderized by mixing the emulsifier and a base for the powderization of the present invention, and powderizing the resulting mixture.

In the method for powderizing non-saccharide ingredients of the present invention, a saccharide-derivative of α,α-trehalose, used for the base for powderization, is not restricted to specific ones as far as it is one or more saccharides selected from non-reducing saccharides having a trehalose structure as an end unit and a glucose polymerization degree of three or higher with the provise that the saccharide composition comprises α-maltosyl α,α-trehalose in a content of 30 w/w% or higher. More concretely, such a saccharide-derivative of α,α-trehalose means a saccharide having a structure of binding any one selected from the group consisting of mono-glucosyl, di-glucosy, tri-glucosyl, or tetra-glucosyl residue, to at least one glucose residue of α,α-trehalose molecule. For example, saccharide-derivatives having a glucose polymerization degree of 3 or higher but 6 or lower, such as mono-glucosyl α,α-trehalose including α-maltosyl α-glucoside and α-isomaltosyl α-glucoside; di-glucosyl α,α-trehalose including α-maltosyl α,α-trehalose (alias α-maltotriosyl α-glucoside), α-maltosyl α-maltoside, α-isomaltosyl α-maltoside, and α-isomaltosyl α-isomaltoside; tri-glucosyl α,α-trehalose including α-maltotriosyl α,α-trehalose (alias α-maltotetraosyl α-glucoside), α-maltosyl α-maltotrioside, and α-panosyl α-maltoside; and tetra-glucosyl α,α-trehalose including α-maltotetraosyl α,α-trehalose (alias α-maltopentaosyl α-giucoside), α-maltotriosyl α-maltotrioside, and α-panosyl α-maltotrioside; which are disclosed in Japanese Patent Kokai Nos. 143876/95. 73504/96, and 228980/2000, and Japanese Patent No.3182679 by the same applicant as the present invention; can be preferably used.

Those saccharide-derivatives of α,α-trehalose are not restricted to their origins and processes of the production and those produced by fermentation, enzymatic method and synthetic method can be arbitrarily used. They can be directly produced from starch or starch hydrolyzates by enzymatic methods disclose in Japanese Patent Kokai Nos. 143876/95, 73504/96, and 228980/2000, and Japanese Patent No. 3182679 by the same applicant as the present invention. Further, they can be produced by the steps of hydrolyzing starch to partial hydrolyzates containing specific oligosaccharides such as maltotetoraose, maltopentaose, maltohexaose, maltoheptaose, etc., by using maltotetoraose-forming enzyme, disclosed in Japanese Patent Kokai No. 143876/95, maltopentaose-forming α-amylase, disclosed in Japanese Patent Kokoku. No. 14962/95, and maltohexaose, maltoheptaose-forming amylase, disclosed in Japanese Patent Kokai No. 236476/95, and allowing a non-reducing saccharlde-forming enzyme, disclosed in Japanese Patent Kokai No. 143876/95 to act on the resulting hydrolyzates. They can be optionally produced by allowing a glycosyl-transferase such as cyclodextrin glucanotransferase to act on a solution comprising starch or partial starch hydrolyzates and α,α-trohalose. A reaction mixture, obtained by those methods, can be optionally used intact as a solution containing saccharides comprising saccharide-derivatives of α,α-trehalose or used after purifying partially or highly. In addition, those methods can be advantageously used industrially because saccharide-derivatives of α,α-trehalose can be produced efficiently at a lower cost using a starchy substance, an abundant and inexpensive substrate, as a material.

Among the aforesaid saccharide-derivatives of α,α-trehalose, α-maltosyl α,α-trehalose, is advantageously used in the present invention because it has low viscosity, high quality retaining-activity for powderized compositions such as the retaining activity of flavor and taste, and an advantageous processing aptitude regardless of low DE. As such saccharides, a saccharide composition, comprising α-maltosyl α,α-trehalose (alias α-maltotriosyl α-glucoside), disclosed in Japanese Patent Kokai No. 143876/95, as a major component and one or more saccharides selected from the group consisting of α-glucosyl α,α-trehalose (alias α-maltosyl α-glucoside), α-maltotriosyl α,α-trehalose (alias α-maltotetraosyl α-glucoside), and α-glycosyl α,α-trehalose (alias α-glycosyl α-glucoside) as other components, is desirable. Particularly, a saccharide composition comprising α-maltosyl α,α-trehalose in a content of about 30 w/w% (hereinafter, "w/w%" is simply abbreviated as "%" in this specification, unless specified otherwise) or higher, desirably, 50% or higher, is used. The DE value of the saccharide composition is preferably about 20 or lower, desirably, 16 or lower, because it hardly causes the Maillard reaction. The viscosity of a syrup comprising saccharide-derivatives of α,α-trehalose is preferably about 10,000 mPa·s or lower, desirably, about 3,000 mPa·s or lower, more desirably, about 1,500 mPa·s or lower when the concentration and temperature of the syrup are respectively 70% and 25° C, from the viewpoints of the processing aptitude for spray-drying and energy efficiency.

A base comprising saccharide-derivatives of α,α-trehalose, used in the method for the powdrization of the present invention, is not restricted to its form, and any form such as syrup, massecuite, paste, or powder, can be used. The base can be used intact or, optionally, in the form of a mixture with filler, excipient, and binder.

The method for the powderization of the present invention can exert a prescribed effect by incorporating saccharide-derivatives of α,α-trehalose as effective ingredients into the objective non-saccharide ingredients in a liquid or paste form and drying the resulting mixture. Therefore, in the method for the powderization of the present invention, saccharide-derivatives of α,α-trehalose, incorporated as effective ingredients into non-saccharide ingredients, can be used in a suitable process from the steps of preparing material to drying, considering with the composition and the purpose of the objective non-saccharide ingredients.

In the method for the powderization of the present invention, a saccharide-derivative(s) of α,α-trehalose can be incorporated into the objective non-saccharide ingredients during any process to the powderization and the method for incorporating can be appropriately selected among the following conventional methods; mixing, kneading, dissolving, melting, dispersing, suspending, emulsifying, and coating.

The amount of a saccharide-derivative(s) of α,α-trehalose to be incorporated as an effective ingredient into non-saccharide ingredients before drying is not restricted as far as it can exercise the function as a base of the powderization. The preferable amount of a saccharide-derivative(s) of α,α-trehalose is, usually, about 5% or higher, desirably, about 10% or higher, more desirably, 20% or higher, on a dry solid basis, to the total weight of a powdery composition. In the case of the amount less than about 1%, a saccharide- derivative (s) of α,α-trehalose can not exercise the function as a base for the powderization. Upper limit of the amount of a saccharide-derivative (s) of α,α-trehalose to be incorporated is not restricted as far as it does not inhibit the function of the objective non-saccharide ingredients or the purpose of uses.

A base, comprising a saccharide-derivative(s) of α,α-αtrehalose, in a content of, usually, about 10% or higher, desirably, about 20% or higher, more desirably, about 30% or higher, on a dry solid basis, to the total weight of the base, is preferable as the base for the powderization of the present invention.

A saccharide-derivative(s) of α,α-trehalose; a saccharide composition comprising the saccharide-derivative(s) of α,α-trehalose and other saccharides originated from starch such as glucose, isomaltose. maltose, oligosaccharides, dextrins, which are formed in the process of producing a saccharide-derivative(s) of α,α-trehalose; and a saccharide composition comprising the saccharide-derivative (s) of α,α-trehalose and sugar alcohols, produced by hydrogenating the above saccharide composition to convert reducing saccharides coexisted with the saccharide-derivative(s) of α,α-trehalose can be arbitrarily used as a base for the powderization of the present invention.

A saccharide-derivative(s) of α,α-trehalose, an effective ingredient (s) of a base for the powderization of the present invention, has a low reducibility (low DE) compared with reducing partial starch hydrolyzates such as dextrin and starch syrup and is stable against acid and temperature. Therefore, in the case of mixing it with other materials, particularly, with substances having amino acids or amino groups such as amino acids, oligopeptides, polypeptides, proteins, etc., and then processing, the saccharide-derivative(s) of α,α-trehalose hardly deteriorates its color and generates bad taste and smell, and hardly deteriorate the flavors of other mixed materials. Also, differing from reducing partial starch hydrolyzates, a syrup of the saccharide-derivative(s) of α,α-trehalose has a low and smooth viscosity without starchy feeling, no starchy smell which is originatted from dextrin, and satisfactory characteristics such as a low hygroscopicity, ease for drying, suppressing ability for stickiness, and high solubility. Since the saccharide- derivative(s) of α,α-trehalose has a low but fine, elegant aftertaste, it can be advantageously used intact as a base for the powderization. Optionally, the saccharide-derivative (s) of α,α-trehalose can be used with one or more substances selected from the group consisting of reducing saccharides, non-reducing saccharides, sugar alcohols, sweeteners with high sweetness, water-soluble polysaccharides, organic acids, inorganic acids, salts, emulsifiers, oxidation-inhibiting agents, and substances having a chelating activity, according to the purpose of increasing dispersibility or the amount. If necessary, the saccharide-derivative(s) of α,α-trehalose can be used with a suitable amount of one or more substances selected from conventional colorings, flavors, preservatives, acidifiers, seasonings, sweeteners, stabilizers, fillers, alcohols, and water-soluble polymers.

Concretely, the saccharide-derivative(s) of α,α-trehalose can be used by mixing with a suitable amount(s) of one or more other substances: For example, reducing or non-reducing saccharides such as partial starch hydrolyzates, glucose, maltose, sucrose, palatinose. α,α-trehalose, neotrehalose, isotrehalose, isomerized sugar, honey, maple sugar, coupling sugar, isomaltooligosaccharide, galactooligosaccharide, fructooligosaccharide, lactosucrose, cyclic tetrasaccharide and/or its saccharide-derivatives disclosed by the same applicant as the present invention in International Patent Application Nos. WO 02/24832, WO 02/10361, and WO 02/072594; sugar alcohols such as erythritol, xylitol, sorbitol, maltitol, lactitol, and panitol; sweeteners with high sweetness such as dihydrochalcone, stevioside, α-glycosyl stevioside, rebaudioside, glycyrrhizin, L-aspartyl L-phenylalanine methyl ester, acesulfame K, sucralose, and saccharine; other sweeteners such as glycine, alanine, etc.; and phosphoric acid, polyphosphoric acid, and their inorganic salts. Optionally, the saccharide-derivative(s) of α,α-trehalose can be used by mixing with fillers such as a dextrin, starch, lactose, etc. Further, the saccharide-derivative(s) of α,α-trehalose can be optionally used with one or more other substances including organic acid and their salts such as lactic acid, sodium lactate, citric acid, and sodium citrate; polyphenols such as saponin, flavonoid, tea-catechin, grape seed extract, etc.; alcohols such as ethanol; water-soluble polymers such as levan, sodium alginate, agar, gelatin, casein, methyl-cellulose, carboxymethyl-cellulose, polyvinylalcohol, polyvinylpyrrolidone, polydextrose, etc.

The powdery composition, obtained by the method of the present invention, keeps its flavor and functions for a long time because the saccharide-derivative(s) of α,α-trehalose, comprised in the composition, has a satisfactory retaining activity of flavors, taste, colorings, etc., and suppresses the deterioration of products such as denaturation of proteins, retrogradation of starch, oxidation and decomposition of lipids during the heating, drying and preserving. The uses of the powdery composition, obtained by the method of the present invention, are varied depending on the fields. For example, powdery agricultural/ marine/ farm products; powdery fats, powdery flavors, powdery colorings, powdery emulsifiers, powdery preservatives, powdery biologically active substances and/or powdery functional substances can be used intact as powdery seasonings such as a powdery soy sauce, powdery *miso,* powdery vinegar for *sushi,* powdery soup, powdery bonito extract, powdery *"mirin",* powdery "*shin-mirin",* etc., and flakes or a material for producing those. Varying depending on the uses of non-saccharide ingredients, dried solids or granules of non-saccharide ingredients, prepared during the process of the method for powderization of the present invention, can be optionally used in an intact form without powderizing.

The powderized composition, obtained by the method of the present invention, can be advantageously used as a material or intermediate to produce various foods and beverages, for example, rice cakes such as *"senbei"* (a rice cracker), "*arare*" (a rice cake cube), *"oxoshi"* (a millet and rice cake); various *"wagashi"* (Japanese cakes) such as *"gyuhi"* (a starch paste), *"monaka"* (a Japanese cake), *"mochi"* (a rise paste), *"ohagi"* (a rice dumpling with bean jam), *"manju"* (a bun with a bean-jam), *°karukan"* (a kind of rice cake). *"viro"* (a sweet rice jelly), "*an*" (a bean-jam). *"yokan"* (a sweet jelly of beans). *"mizu-yokan"* (a soft *azuki*-bean jelly), *"kingyoku"* (a kind of *yokan), "kintsuba"* (a wheat cake with bean jam), sweet potato, Bavarian cream, jelly, pao de Castella, "*amedama*" (a Japanese toffee), and the like; baked confectionaries such as biscuit, cookie, cracker, pie, cream puff, waffle, sponge cake, doughnut, pastry; Western confectioneries such as pudding, butter cream, custard cream, chocolate, chewing gum, caramel, soft candy such as marshmallow, hard candy, fondant, icing, and the like; snack, cereal, center liquid confectionary, merengue; breads such as ban, roll ban, "*an*" ban, maffin, and the like; syrups such as a *"kajitsu-no-syrup-zuke"* (a preserved fruit) and *"korimitsu"* (a sugar syrup for shaved ice); pastes such as a flour paste, peanut paste, fruit paste, spread, and the like; processed fruits such as jam, marmalade, preserve, "*syrup-zuke*" (fruit pickles), *"toka"* (conserves), cut fruits, and the like; processed vegetables such as germinated vegetables including beansprout, alfalfa, broccolisprout, and the like, vegetable juices including kale juice, cut vegetables, salad, boiled vegetables, and the like; pickles and pickled products such as a *"fukujin-zuke*" (red colored radish pickles), *"bettara-zuke"* (a kind of whole fresh radish pickles), "*senmai-zuke"* (a kind of sliced fresh radish pickles), *and "rakkyo-zuke"* (pickled shallots), *"taxuan-zuke"* (a radish pickles), *"hakusai-zuke"* (a Chinese cabbage pickles) and premix for pickles and pickled products such as a *"asa-zuke-no-moto"* (a premix for pickles); cooked rice such as boiled rice, rice ball, *"okowa"* (boiled glutinous rice), "*okayu*" (rice porridge), *"sush-meshi"* (vinegared rice for sushi*)*,*"takikomi-gohan"* (cooked rice and vegetables), gelatinous rice, and the like; processed beans such as soymilk, *"tofu"* (bean curd), "*Koya-tofu*" (dried bean curd), *"natto"* (fermented soybeans), and the like; noodles such as *"udon"* (a wheat noodle)*."soba"* (a buckwheat noodle), Chinese noodle, pasta, and the like; *okonomi-yaki", "tako-yaki"* (octopus ball), *"tai-yaki",* croquette, Chinese meat dumpling, Chinese dumpling, spring roll, meat products such as a ham and sausage; products of fish meat such as a fish ham, fish sausage, *"kamaboko"* (a steamed fish paste). *"chikuwa" "*(a kind of fish paste), and *"tenpura"* (a Japanease deep-fat fried fish paste) ; "*chinmi*" (relish) such as a *"uni"* (urchin), *"ika-no-shiokara"* (salted guts of squid), *"su-konbu"* (processed tangle), *"saki-surume"* (dried squid strips). *"fugu-no-mirin-boshi"* (a dried *mirin*-seasoned swellfish), salmon roe, seasoned laver, and the like; sauces for seasoning grilled meat, broiled eel, *"dango"* (dumpling), *"senbei"* (a rice cracker); *"tsukudani"* (foods boiled down in soy sauce) such as those of laver, edible wild plants, dried squid, small fish, and shellfish; daily dishes such as a *"nimame"* (cooked beans), potato salad, and *"konbu-maki"* (a tangle roll); processed egg such as egg, omelet, scrambled egg, pot-steamed hotchpotch, and the like; milk products such as cheese, yoghurt, and the like; frozen foods, refrigerated foods, chilled foods, retort foods, dried foods and freeze-dried foods such as those of fish meat, meat, fruit, and vegetable; canned and bottled products such as those of vegetable; premix products such as pudding mix, hot cake mix, batter mix, and the like; instant food products such as *"sokuseki-shiruko"* (an instant mix of *azuki*-bean soup with rice cake), instant soup, and the like; foods for babies, foods for therapy, peptide foods; alcoholic beverages such as a *sake,* synthetic *sake,* liquor, foreign liquor, beer, low-malt beer, and the like; soft drinks such as a green-tea, tea, coffee, cocoa, juice, carbonated beverage, sour milk beverage, and beverage containing a lactic acid bacterium.

The powderized composition obtained by the present invention can be arbitrarily used as a material of feeds and pet foods for domestic animals, poultry, pets, honey bees, silk warms, and fishes; and also for shellfish such as shrimp and crab, echinoderm such as urchin and sea cucumber, and larva and adult of insects. Also, it can be used as a material or intermediate in other products in a solid, liquid, or paste form to produce amenities, cosmetics, medicated cosmetics, pharmaceuticals, commodities, agrochemicals, and products of chemical industries such as tobacco, cigarette, tablet, troche, cod-liver oil in the form of drop, lipstick, rouge, lip cream, tooth paste, internal liquid medicine, oral refrigerant, cachou, and gargle.

The amount of the powderized composition to be incorporated into foods and beverages, cosmetics, medicated cosmetics, pharmaceuticals, commodities, agrochemicals, and products of chemical industries, obtained in the present invention, is varied depending on the kinds and forms of the final products. Usually, the powderized composition can be incorporated into those in the range of about 0.001% to about 100% to the total weight of each product.

The following experiments concretely explain the method for powderizing non-saccharide ingredients of the present invention.

### Experiment 1 (Reference Example)

A test sample was prepared by dissolving 225 parts by weight of a powdery saccharide-derivative of α,α-trehalose, comprising 52.5% of α-maltosyl α,α-trehalose and 4.1% of α-glucosyl α,α-trehalose, d.s.b., prepared by the method of Example A-2 described later; and 183 parts by weight of a concentrated lemon juice (Brix: 41%), obtained by concentrating lemon juice to reduce volume to 1/5, commercialized by Tokyo Food Techno Co., Ltd., Tokyo, Japan, in 567 parts by weight of water. The test sample was spray-dried using "SD-1", a desktop spray-drier commercialized by EYELA Tokyo Rika Kikai Co., Ltd., Tokyo, Japan, controlled its inlet and outlet temperatures to about 140°C and about 75°C, to make into a powdery lemon juice. As a control sample, a powdery lemon juice was prepared by the same procedure as above except for using the same amount of "SUNDEX #180" a dextrin commercialized by Hayashibara Shoji Inc., Okayama, Japan, instead of saccharide-derivative of α,α-trehalose. Both samples were placed into polyethylene bags, respectively, and preserved at ambient temperature for three months. After the preservation, 30 parts by weight of the test sample and control preparations were dissolved in 170 parts by weight of water, respectively. The flavor and taste of those lemon juices thus obtained were evaluated by allowing eleven panels to drink them. As a result, all the panels answered that the test sample solution, prepared from the powdery lemon juice, which was powderized using the saccharide-derivative of α,α-trehalose, gave no unpleasant smell generated by the deterioration during the preservation and retained satisfactory flavor and taste of lemon juice. On the contrary, all the panels answered that the control sample solution showed a remarkable unpleasant smell by the deterioration during the preservation. Therefore, it was revealed that the saccharide-derivative of α,α-trehalose can be advantageously used for stabilizing powdery juice during the preservation. Also, it was confirmed that the saccharide-derivative of α,α-trehalose can be advantageously used as a base for powderization because it suppresses the deterioration of powdery compositions and retains their flavors in comparison with dextrins, substances conventionally used as a base for powderization.

### Experiment 2 (Reference Example)

Sixty parts by weight of a syrupy saccharide-derivative of α,α-trehalose, comprising 52.5% of α-maltosyl α,α-trehalose and 4.1% of α-glucosyl α,α-trehalose, d.s.b., prepared by the method of Example A-1 described later; and 50 parts by weight of gum Arabic were dissolved in 130 parts by weight of water, and then heated at 85 to 90°C for 15 minutes. After cooling the solution to 40° C, 10 parts by weight of lime oil was admixed with the solution and the resulting mixture was emulsified using a homogenizer. The emulsified solution was spray-dried using a desktop spray-drier controlled its inlet and outlet temperatures to about 140°C and about 75°C, respectively, similarly as in the case of Experiment 1 to make into a powdery lime flavor as a test sample. As a control sample, a powdery lime flavor was prepared by the same procedure except for using the same amount of sucrose instead of the saccharide-derivative of α,α-trehalose. Twenty four parts by weight of glucose, 42.4 parts by weight of sucrose, two parts by weight of citric acid, one part by weight of sodium citrate, and 0.5 part by weight of vitamin C were mixed with 0.1 part by weight of either of the test sample and the control to make into powdery beverages. Fifty grams of both the test sample and the control were placed into polyethylene bags, respectively, and preserved at 37° C for three months. After the preservation, seven parts by weight of the test sample and the control were dissolved in 100 parts by weight of water, respectively. The flavor and taste of those were evaluated by allowing eleven panels to drink them. As a result, all the panels answered that the test sample solution, prepared from powdery lime oil, which is powderized using saccharide-derivative of α,α-trehalose, showed no unpleasant smell generated by the deterioration during the preservation and retained satisfactory flavor and taste of lime oil. On the contrary, all panels answered that the control sample solution showed a remarkable unpleasant smell by the deterioration during the preservation. Therefore, it was revealed that saccharide-derivative of α,α-trehalose can be advantageously used for stabilizing powdery juice during the preservation.

The following Examples A and B concretely explain the base for powderization of the present invention, comprising a saccharide-derivative (s) of α,α-trehalose, and powdery compositions prepared by incorporating the base for powderization into non-saccharide ingredients, respectively.

### Examples A

### Base for powderization

A base for powderization, described below, can be used for suppressing the quality deterioration of powdery compositions and keeping the flavors and functions, such as taste, flavor, color, texture well by incorporating into non-saccharide ingredients such as foods and beverages, cosmetics, medicated cosmetics, pharmaceuticals, feeds, pet-foods, commodities, sundries, agrochemicals, products of chemical industry, and powderizing the resulting mixture.

### Example

A corn starch was prepared into an about 20% starch suspension, admixed with calcium carbonate to give a final concentration of 0.1%, and the pH was adjusted to 6.5. The resulting substrate solution was admixed with 0.2%/g-starch, d.s.b., of "THERMAMYL 60L", an α-amylase commercialized by Novo Nordisk A/S, Bagsværd, Denmark, and reacted at 95°C for 15 minutes. After autoclaving at 120°C for 10 minutes, the reaction mixture was cooled to 50°C, adjusted to pH 5.8, admixed with 5 units/g-starch of maltotetraose-forming amylase, disclosed in Japanese Patent Kokai No. 240784/88, commercialized by Hayashibara Biochemical Laboratories Inc., Okayama, Japan, and 500 units/g-starch of isoamylase commercialized by Hayashibara Biochemical Laboratories Inc., Okayama, Japan, and followed by the enzymatic reaction for 48 hours. After the reaction, 30 units/g-starch of "α-AMYLASE 2A", α-amylase commercialized by Ueda Chemical Industries Co., Ltd.. Hyogo, Japan, was further admixed with the reaction mixture and followed by the enzyme reaction at 65° C for four hours. After autoclaving at 120° C for 10 minutes, the reaction mixture was cooled to 45° C, admixed with 2 units/g-starch of non-reducing saccharide-forming enzyme originated from *Arthrobacter* sp. Q36 (FREM BP-4316), disclosed in Japanese Patent Kokai No. 44695/81, and followed the enzymatic reaction for 48 hours. The reaction mixture was heated to 95°C and kept for 10 minute, and then cooled and filtered to obtain a filtrate. According to the conventional manner, the resulting filtrate was decolored with activated charcoal, desalted and purified with ion exchangers in Hand OH- forms, and then concentrated into a 70%-syrup of a base for the powderization in a yield of about 90% to the material starch, d.s.b. The product showed the DE of 13.7 and contained 52.5% of α-maltosyl α,α-trehalose (alias α-maltotriosyl α-glucoside), 4.1% of α-glucosyl α,α-trehalose (alias α-maltosyl α-glucoside), 1.1% of α-maltotriosyl α,α-trehalose (alias α-maltotetraosyl α-glucoside), and 0.4% of other α-glycosyl α,α-trehalose, on a dry solid basis, as saccharide-derivatives of α,α-trehalose. The saccharide composition has about 30% sweetness compared with that of sucrose, and smooth viscosity with no starchy feeling.

### Example A-2

A base for powderization in a syrupy form, prepared by the method of Example A-1, was spray-dried by the conventional method to produce an amorphous powdery product. The product shows a low hygroscopicity and a satisfactory solubility in water, and can be advantageously used as a base for powderization.

### EXample A-3

A saccharide solution prepared by the method of Example A-1 was subjected to a column chromatography using "DOWEX 50W-X4 (Mg²⁺-form)", a strong acid cation-exchanger resin commercialized by The Dow Chemical Company, Michigan. USA- The resin was packed into four-jacketed stainless steel columns having a diameter of 5.4 cm, which were then cascaded in series to give a total gel bed depth of 20 m. Under the conditions of keeping the inner column temperature at 55° C, the saccharide solution was fed to the columns in a volume of 5%(v/v) and fractionated by feeding to the columns hot water heated to 55°C at an SV (space velocity) of 0.13 to remove high glucose and maltose content fractions, and then collected high content fractions of saccharide-derivative of α,α-trehalose. The resulting saccharide solution was further purified and concentrated, and then spray-dried to prepare amorphous powdery base for the powderization comprising saccharide-derivatives of α,α-trehalose in a high content. The product contained 70.2% of α-maltosyl α,α-trehalose, 6.1% of α-glucosyl α,α-trehalose, 2.1% of α-maltotriosyl α,α-trehalose, and 4.1% of other α-glycosyl α,α-trehalose, on a dry solid basis, as saccharide-derivatives of α,α-trehalose. The product shows a low hygroscopicity and a satisfactory solubility in water.

### Example A-4

One part by weight of a potato starch was admixed with six parts by weight of water and then admixed with "NEOSPITASE", α-amylase commercialized by Nagase & Co., Ltd., Osaka, Japan, to give a final concentration of 0.01%/starch, and the pH was adjusted to 6.0. The resulting starch suspension was kept at 85 to 95°C to gelatinize and liquefy starch simultaneously and heated immediately at 120° C for five minutes to keep the DE lower than 1.0. Then, the solution was rapidly cooled to 55°C, adjusted to pH 7.0, admixed with 150 units/g-starch, d.s.b., of "PULULLANASE", an pullulanase (EC 3.2.1.41) commercialized by Hayashibara Biochemical Laboratories Inc. , Okayama, Japan, and eight units/g-starch, d.s.b., of maltotetraose-forming amylase, disclosed in Japanese Patent Kokai No. 240784/88, commercialized by Hayashibara Biochemical Laboratories Inc.. Okayama, Japan, and followed by the enzymatic reaction at 50° C, pH 7.0 for 36 hours. After autoclaving at 120° C for 10 minutes, the reaction mixture was cooled to 53° C, admixed with 2 units/g-starch of non-reducing saccharide-forming enzyme originated from *Arthrobacter* sp. S34 (FREM BP-6450), disclosed in Japanese Patent Kokai No. 187249/98, and followed the enzymatic reaction for 64 hours. The reaction mixture was heated to 95° C and kept for 10 minute, and then cooled and filtered to obtain a filtrate. According to the conventional manner, the resulting filtrate was decolored with activated charcoal, desalted and purified with ion exchangers in Hand OH- forms, and then concentrated. The concentrate was spray-dried and amorphous powdery base for the powderization comprising saccharide-derivatives of α,α-trehalose was obtained in a yield of about 90% to the material starch, d.s.b. The product showed the DE of 11.4 and contained 62.5% of α-maltosyl α,α-trehalose, 2.1% of α-glucosyl α,α-trehalose, 0.8% of α-maltotriosyl α,α-trehalose, and 0.5% of other α-glycosyl α,α-trehalose, on a dry solid basis. The product shows a low hygroscopicity and a satisfactory solubility in water.

### Example A-5

A reagent grade maltotetraose (purity 97.0% or higher), commercialized by Hayashibara Biochemical Laboratories Inc., Okayama, Japan, was prepared into 20% solution and admixed with two units/g-saccharide of non-reducing saccharide-forming enzyme, disclosed in Japanese Patent No. 44695/81, and followed enzymatic reaction at 46°C for 48 hours, and the saccharide solution containing 79.8% of α-maltosyl α,α-trehalose, d.s.b., was obtained. After adjusting the pH to 6.0, the saccharide solution was admixed with 10 units/g-saccharide of β-amylase, commercialized by Nagase & Co., Ltd., Osaka, Japan, and followed enzymatic reaction at 50° C for 48 hours to hydrolyze maltotetraose. After autoclaving at 120°C for 10 minutes, the reaction mixture was cooled and filtrated. The resulting filtrate was subjected to a column chromatography using "XT-1016 (Na⁺-form, degree of crosslinking 4%)", a strong acid cation-exchanger resin commercialized by Rohm and Hass Japan K.K., Fukushima, Japan, and collected α-maltosyl α,α-trehaloss high content fractions. The saccharide solution was purified, concentrated, and spray-dried to prepare an amorphous powdery α-maltosyl α,α-trehalose high content base for the powderization. The product contained 98.1% of α-maltosyl α,α-trehalose and the reducing power was low as less than the detection limit of measurable by Somogyi-Nelson method. The product shows a low hygroscopicity and a satisfactory solubility in water. Since the product shows no reducibility, it is preferably used as a base for the powderization for healthy foods, cosmetics, medicated cosmetics, pharmaceuticals, feeds, pet-foods, products of chemical industries, etc., comprising an effective ingredient(s) such as amino acids and compounds having an amino group(s), having a disadvantage of losing its activity by the Maillard reaction.

The above saccharide preparation was dissolved in water again, removed pyrogen by treating with activated charcoal, and spray-dried to make into an amorphous powdery α-maltosyl α,α-trehalose high content base for the powderization. The product shows a low hygroscopicity and a satisfactory solubility in water. Further, since the product was removed pyrogen, it is preferably used as a base for powderization for pharmaceuticals.

### Example A-6

A syrup comprising saccharide-derivatives of α,α-trehalose, prepared by the method of Example A-1, was diluted with water to give a saccharide concentration of about 60%, placed into an autoclave, admixed with about 8.5% of Raney nickel. The mixture was heated to 128° C with stirring and hydrogenated by increasing hydrogen pressure to 80 kg/cm² to convert reducing sugars such as glucose and maltose, coexisting with saccharide-derivatives of α,α-trehalose, into corresponding sugar alcohols. After removing Raney nickel from the reaction mixture, the resulting solution was decolored, desalted, and concentrated to make into a base for the powderization in a syrupy form. The product shows a low hygroscopicity and a satisfactory solubility in water. Since the product shows no reducibility, it is preferably used as a base for powderization for cosmetics, medicated cosmetics, pharmaceuticals, healthy foods, etc., comprising an effective ingredient(s), having a disadvantage of losing its activity by the Maillard reaction.

### Example A-7

An amorphous powder comprising saccharide-derivatives of α,α-trehalose, prepared by the method of Example A-2, was dissolved in water to give a saccharide concentration of about 60%, placed into an autoclave, admixed with about 9% of Raney nickel. The mixture was heated to 130° C with stirring and hydrogenated by increasing hydrogen pressure to 75 kg/cm² to convert reducing sugars such as glucose and maltose, coexisting with saccharide-derivatives of α,α-trehalose, into corresponding sugar alcohols. After removing Raney nickel from the reaction mixture, the resulting solution was decolored, desalted, and concentrated to make into a base for the powderization in a syrupy form. Further, the product was spray-dried by the conventional method to make into an amorphous powdery base for the powderzation. The product shows a low hygroscopicity and a satisfactory solubility in water. Since the product shows no reducibility, it is preferably used as a base for powderization for cosmetics, medicated cosmetics, pharmaceuticals, healthy foods, etc., comprising an effective ingredient(s), having a disadvantage of losing its activity by the Maillard reaction.

### Example A-8

Sixty parts by weight of a base for the powderization in a powdery form, prepared by the method of Example A-2, and 40 parts by weight of "MABIT®", commercially available anhydrous crystalline maltitol commercialized by Hayashibara Shoji Inc., Okayama, Japan, were admixed with 65 parts by weight of water and dissolved. The mixture was spray-dried by the conventional method to make into a base for powderization.

### Example A-9

Seventy parts by weight of a base for powderization in a syrupy form, prepared by the method of Example A-1, two parts by weight of L-ascorbic acid 2-glucoside, commercialized by Hayashibara Biochemical Laboratories Inc., Okayama. Japan, and two parts by weight of "αG-RUTIN" , enzyme-treated rutin commercialized by Toyo Sugar Refining Co; ltd., Tokyo, Japan, were admixed with 50 parts by weight of water and dissolved. The mixture was spray-dried by the conventional method to make into a base for powderization.

### Example A-10

One hundred parts by weight of a base for powderization in a syrupy form, prepared by the method of Example A-6, two parts by weight of a water-soluble polysaccharide, Arabic gum, and 0.5 part by weight of water soluble hemicellulose were admixed with 60 parts by weight of water and dissolved. The mixture was spray-dried by the conventional method to make into a base for powderization.

### Example A-11

Fifty parts by weight of a base for powderization, prepared by the method of Example A-2, and 10 parts by weight of "TREHA^{®}"**,** commercially available hydrous crystalline α,α-trehalose commercialized by Hayashibara Shoji Inc., Okayama, Japan, were mixed to make into a base for powderization.

### Examples B (Reference examples, outside the scope of the method claims)

### Powdery composition comprising a base for powderization

### Example B-1

### Table sugar

Fifty parts by weight of a base for powderization in a powdery form, prepared by the method of Example A-2, 46 parts by weight of anhydrous crystalline maltitol, three parts by weight of "αG-HESPERIDINE^{®}", glucosyl-hesperidine, commercialized by Toyo Sugar Refining Co; ltd.. Tokyo, Japan, and one part by weight of sucralose commercialized by San-Ei Gen F.F.I. , Inc. , Osaka, Japan, were dissolved In 200 parts by weight of water and the resulting mixture was spray-dried by the conventional method to produce powdery sweetener. Since the base for powderization of the present invention suppresses the hygroscopicity, the product is a powdery sweetener having a satisfactory fluidity and showing no caking. Also, since the saccharide derivative of α,α-trehalose as an effective ingredient of the base and glucosyl-hesperidine improve a bad taste of sucralose, the product is preferable as a sweetener for various foods and beverages, medicated cosmetics, pharmaceuticals, etc. as well as a table sugar for coffee and tea.

### Example B-2

### Powdery dried bonito extract for seasoning

Dried bonito was produced from fresh bonito by the conventional method except using a solution prepared by dissolving a base for powderization in a powdery form, prepared by the method of Example A-2 to give a concentration of 18% for boiling the bonito. To 100 parts by weight of the shaved dried bonito prepared using a grinder for dried bonito, 500 parts by weight of water was added and boiled for five minutes and then cooled to produce dried bonito extract. After concentrating the dried bonito extract to give a volume of 1/10, one part by weight of a base for powderization in a syrupy form, prepared by the method of Example A-1, was admixed with nine parts by weight of the concentrate and dissolved with stirring. The resulting solution was spray-dried by the conventional method to produce a powdery bouillon. The product is a powdery bouillon having a preferable taste and flavor of dried bonito and a satisfactory body. Since the product has a satisfactory stability for preservation with keeping a fluidity without caking, it is preferable as a material to produce bouillon or seasonings in a powdery, liquid, solid, or paste form in intact or combination with other extracts.

### Example B-3

### Powdery soy sauce

To three parts by weight of soy-sauce, 1.5 parts by weight of a base for powderization in a syrupy form, prepared by the method of Example A-1, was dissolved and spray-dried by the conventional method to make into powdery soy sauce. Since the product shows no hygroscopicity and retains taste and flavor of soy-sauce after preserving a relatively long period, it can be advantageously used as a seasoning for instant noodle, instant soup, etc.

### Example B-4

### Powdery milt

To 100 parts by weight of fresh milk, 1.5 parts by weight of a base for powderization in a syrupy form, prepared by the method of Example A-1, was dissolved and then heated to about 50°C, and concentrated under a reduced pressure to give a milk dry solid of 30%. The concentrate was spray-dried by the conventional method to produce powdery milk. Since the product shows no hygroscopicity and color deterioration, retains preferable taste and flavor of milk after preserving a relatively long period, and can be dissolved speedily, it can be advantageously used as a material for various foods and beverages, and as a powdery milk for coffee.

### Example B-5

### Powdery egg yolk

Egg yolk solution was prepared by separating egg yolk from fresh egg and sterilized the resulting egg yolk at 60 to 64° C using a plate-type heating sterilizer. Four parts by weight of a base for powderization in syrupy form, prepared by the method of Example A-1 was admixed with one part by weight of the resulting egg yolk solution and the resulting mixture was dried using a drum drier and powderized by the conventional method to make into powdery egg yolk. The product can be advantageously used as oral and tube feedings such as baby foods and nutritional supplements for treatment as well as materials for confectionaries such as premix, frozen dessert, emulsifiers.

### Example B-6

### Powdery soy bean

One part by weight of soy beans, which are swelled with water and removed the outer shell, five parts by weight of water and three parts by weight of a base for powderization in syrupy form, prepared by the method of Example A-1 were mixed and the resulting mixture was homogenized to make into soy bean homogenate. The homogenate was spray-dried by the conventional method to prepare powdery soy bean. The product stably retains vitamins and isoflavone of soy beans. The product can be optionally used as health supplements, oral and tube feedings such as baby foods and nutritional supplements for treatment as well as materials for confectionaries such as premix and frozen dessert.

### Example B-7

### Powder yoghurt

Two parts by weight of a plain yoghurt, one part by weight of a base for powderization in powdery form, prepared by the method of Example A-2, and a base for powderization in powdery form, prepared by the method of Example A-6 were mixed and powderized to male into powdery yoghurt. The product has a satisfactory flavor and is able to stabilize lactic acid bacteria in a living form for a long period. The product can be advantageously used as oral and tube feedings such as baby foods and nutritional supplements for treatment as well as materials for confectionaries such as premix, frozen dessert, and emulsifiers, furthermore, as a yoghurt flavor for foods such as margarine, whip cream, spread, cheese cake, jelly, etc. Also, the product can be optionally used as an antiflatulent by making into a lactobacillus preparation using a granulator or tablet machine.

### Example B-8

### Powdery vegetable juice

Sliced kale, broccoli, parsley, celery, and carrot were mixed and the mixture was blanched at 95°C for 20 minutes. After adding a base for powderization in a powdery form, prepared by the method of Example A-2, and L-ascorbic acid to the blanched vegetables to give contents of 3% and 0.2%, respectively, the mixture was homogenized to make into a vegetable juice. After concentrating the vegetable juice to give a volume of 1/5, one part by weight of a base for powderization in a powdery form, prepared by the method of Example A-3, was further admixed with four parts by weight of the concentrated vegetable juice. After adjusting the pH to 4.2 by adding citric acid, the mixture was spray-dried according to the conventional method to make into powdery vegetable juice. The product showed no color deterioration and hygroscopicity and retains a satisfactory powdery form even after preserving in a sealed container at ambient temperature for 90 days.

### Example B-9

### Tablet containing vegetable juice

Suitable amounts of powdery vitamin B1 and B2 were admixed with powdery vegetable juice, prepared by Example B-8, and the resulting mixture was made into tablets using a tablet machine to produce vegetable juice tablets. The product shows no color deterioration and hygroscopicity and is a tablet for supplying vitamin B easy to take.

### Example B-10

### Powdery green tea

A base for powderization in a powdery form, prepared by the method of Example A-2, and L-ascorbic acid were admixed with green tea extracted from green tea leaves according to the conventional method to give the contents of 0.5% and 0.2%, respectively, to prepare green tea. After concentrating the green tea to give a volume of 1/20, the concentrate was spray-dried by the conventional method to make into powdery green tea. The product showed no color deterioration and hygroscopicity and retains a satisfactory fluidity and powdery form even after preserving in a sealed container at ambient temperature for 120 days. The product can be advantageously used as a material for various foods and beverages.

### Example B-11

### Powdery ginseng extract

Ginseng extract was concentrated to give a volume of 1/5. Six parts by weight of a base for powderization in a powdery form, prepared by the method of Example A-8, was admixed with the concentrated ginseng extract, and dissolved with stirring. The resulting mixture was spray-dried by the conventional method to prepare powdery ginseng extract. The product shows no hygroscopicity and can be preserved for a long period. The product is preferably used as a material of healthy supplements, cosmetics, medicated cosmetics, pharmaceuticals, etc.

Ten parts by weight of a base for powderization in a syrupy form, prepared by the method of Example A-1, and 10 parts by weight of "TREHA®", hydrous crystalline α,α-trehalose commercialized by Hayashibara Shoji Inc., Okayama, Japan, were admixed with 180 parts by weight of water to prepare a coating solution. According to the conventional method, coated powdery ginseng extract is prepared using 0.75 part by weight of the coating solution to one part by weight of the above powdery ginseng extract. The coated powdery ginseng extract shows a satisfactory stability for oxidation and no hygroscopicity and can be preserved for a long period. The product can be optionally used as a material for healthy foods, other foods and beverages, cosmetics , medicated cosmetics, pharmaceuticals, etc. in an intact, granulated, or tablet form.

### Example B-12

### Powdery royal jelly

Five parts by weight of a base for powderization in a powdery form, prepared by the method of Example A-2, was admixed with one part by weight of royal jelly (moisture content of 65%) and dissolved with stirring. The solution was spray-dried by the conventional method to prepare powdery royal jelly. The deterioration of the product quality is suppressed even after preserving for a long period. Also, since the product has a suppressed unpleasant taste and smell such as irritating smell characteristic of royal jelly and a satisfactory water-solubility, it can be optionally used as a material for healthy foods, other foods and beverages, cosmetics, medicated cosmetics, pharmaceuticals, etc. in an intact or tablet form.

Granulated royal jelly was prepared by admixing small amount of ethanol with the above powdery royal jelly, kneading the resulting mixture, and granulating with extrusion method. While, one part by weight of "PULLULAN PF-20", a pullulan product commercialized by Hayashibara Shoji Inc., Okayama, Japan, 10 parts by weight of a base for powderization in a syrupy form, prepared by the method of Example A-1, 90 parts by weight of "TREHA®" , hydrous crystalline α,α-trehalose commercialized by Hayashibara Shoji Inc. , Okayama, Japan, were admixed with 180 parts by weight of water and stirred to prepare a coating solution. Coated royal jelly granules were prepared by using 0.25 part by weight of the coating solution to one part by weight of the above granulated royal jelly with Waster coating method. The granulated royal jelly and the coated royal jelly granules show a satisfactory stability for oxidation and no hygroscopicity and can be preserved for a long period. The products can be optionally used as a material for healthy foods, other foods and beverages, cosmetics, medicated cosmetics, pharmaceuticals, etc. in an intact, granulated, or tablet form.

### Example B-13

### Powdery lime oil

Five parts by weight of a sucrose-fatty acid ester (HLB (hydrophile-lipophile balance) 15), 45 parts by weight of dextrin (DE 10) and 50 parts by weight of a base for powderization in a syrupy form, prepared by the method of Example A-1, were admixed with 90 parts by weight of water and dissolved. The resulting mixture was sterilized by heating at 85-95°C for 15 minutes. After cooling the solution to about 40°C, 20 parts by weight of lime oil was admixed with the solution with stirring using a homogenizer to make into an emulsion. The resulting emulsion was spray-dried by conventional method to make into powdery lime oil having a satisfactory stability during preservation. The emulsion and the powdery product can be advantageously used as a flavor for various foods and beverages, cosmetics, pharmaceuticals, etc.

### Example B-14

### Powdery flavor

Two hundred eighty parts by weight of Arabic gum (dry solid 30%). 40 parts by weight of a base for powderization in a syrupy form, prepared by the method of Example A-1, and 80 parts by weight of menthol flavor were mixed, spray-dried by the conventional method, and powderized to make into powdery flavor comprising menthol flavor, having an average diameter of 100 µm. One hundred ninety parts by weight, on a dry solid basis, of "YEASTRUP^{®}", a fraction of yeast cell wall commercialized by Kirin Brewery Co., Ltd., Tokyo, Japan, 10 parts by weight of "PULLULAN PF-20", a pullulan product commercialized by Hayashibara Shoji Inc., Okayama, Japan, and 20 parts by weight of a base for powderization in a syrupy form, prepared by the method of Example A-1 were admixed with 1780 parts by weight of water and then stirred to make into coating solution. The above powdery flavor comprising menthol flavor was coated using the coating solution by the conventional method. For coating, five parts by weight of the above coating solution was used to one part by weight of powdery flavor comprising menthol flavor under the conditions of inlet and exhaust temperatures of 70°C and 40°C, respectively. The product showed no hygroscopicity and caking and had a satisfactory retaining activity of the flavor of menthol during the preservation. Powdery flavor comprising menthol flavor before coating can be optionally used as flavor for various foods and beverages, cosmetics, medicated cosmetics, pharmaceuticals, commodities, sundries, etc.

Twenty parts by weight of gum base, 66 parts by weight of powdery saccharide, and 14 parts by weight of a base for powderization in a syrupy form, prepared by the method of Example A-1, were mixed to make into a gum paste. The above product was admixed with the gum paste to give a menthol content of 1.0%, kneaded the mixture at about 40°C for 10 minutes, and shaped into a gum in stick shape. The gum is a delicious chewing gum whose menthol flavor is expressed in a good balance accompanying with the elution of saccharide by chewing.

### Example B-15

### Powdery flavor

Three hundred thirty parts by weight of a base for powderization, prepared by the method of Example A-2, 360 parts by weight of "TREHA^{®}", hydrous crystalline α,α-trehalose commercialized by Hayashibara Shoji Inc., Okayama, Japan, and 20 parts by weight of modified starch were admixed with 200 parts by weight of purified water and heated to 135° C with stirring to melt them. Successively, 75 parts by weight of orange oil was admixed with the melted mixture with stirring and emulsified for 20 minutes. The resulting emulsified flavor was powderized by ejecting under pressure into a cooling bath containing isopropyl alcohol with a temperature of -25°C and stirring. Isopropyl alcohol on the surface of the powder was removed by dried under a reduced pressure using a rotary evaporator. A fraction, which can be passed through the 20 mesh-sieve having mesh size of 840 µm but not through the 60 mesh-sieve having a mesh size of 250 µm, was recovered from the powderized composition after drying and 480 grams of powdery orange flavor. The product showed no hygroscopicity and caking and had a satisfactory retaining activity for orange flavor during the preservation. The emulsified flavor before powderizing can be optionally used as flavor for various foods and beverages, cosmetics, medicated cosmetics, pharmaceuticals, commodities, sundries, etc.

Twenty parts by weight of gum base, 66 parts by weight of powdery saccharide. 14 parts by weight of a base for powderization in a syrupy form, prepared by the method of Example A-1, and 0.4 part by weight of the above product were kneaded at about 40°C for 10 minutes, and shaped into a gum stick. The gum is a delicious chewing gum whose orange flavor is expressed in a good balance accompanying with the elution of saccharide by chewing.

### Example B-16

### Powdery DHA (docosahexaenoic acid)

Twenty parts by weight of gelatinized starch, 50 parts by weight of dextrin and 20 parts by weight of a base for powderization in a powdery form, prepared by the method of Example A-11, were admixed with 100 parts by weight of water and dissolved. The resulting mixture was sterilized by heating at 85-95°C for 15 minutes. After cooling the solution to 40°C, 10 parts by weight of purified fish oil comprising DHA was admixed with the solution and emulsified into an emulsion by using a homogenizer. The resulting emulsion was spray-dried by using a spray-drier whose inlet and outlet temperature were controlled at 140°C and 75°C, respectively, to make into powdery purified fish oil comprising DHA. The emulsion and the powdery product can be advantageously used as a material for various foods and beverages represented by health supplements.

### Example B-17

### Powdery γ-linolenic acid

Five parts by weight of a sucrose-fatty acid ester (HLB (hydrophile-lipophile balance) 15), 45 parts by weight of dextrin (DE 10) and 40 parts by weight of a base for powderization in a syrup form, prepared by the method of Example A-6, were admixed with 100 parts by weight of water and dissolved. The resulting mixture was sterilized by heating at 85-95°C for 15 minutes. After cooling the solution to 40° C, 20 parts by weight of γ-linolenic acid was admixed with the solution with stirring using a homogenizer to make into an emulsion. The resulting emulsion was spray-dried by conventional method using a spray-drier to make into powdery γ-linolenic acid. The emulsion and the powdery product can be advantageously used as a material for various foods and beverages represented by health supplements, cosmetics, medicated cosmetics, and pharmaceuticals.

### Example B-18

### Powdery fat

Twenty-five parts by weight of olive oil and 75 parts by weight of a base for powderization in a powder form, prepared by the method of Example A-2, were mixed using a mixer and the mixture was rolled with a pressing granulator to make into a plate. The resulting plate was pulverized by a conventional method to make into powdery olive oils. The product showed no hygroscopicity and retained the flavor of extra virgin oil well. Oxidation and decomposition of fat in the product were suppressed and the flavor of the product was retained for a long period. The product can be advantageously used as a material for foods, beverages, cosmetics, medicated cosmetics, pharmaceuticals, feeds and pet-foods.

### Example B-19

### Powdery propolis

Twenty-five parts by weight of a propolis extract commercialized by Hayashibara Shoji Inc. , Okayama, Japan, and 75 parts by weight of a base for powderization in a powder form, prepared by the method of Example A-2, were mixed and then spray-dried by the conventional method to make into a powdery propolis. The product showed no hygroscopicity and suppressed smell of propolis. The product can be advantageously used as a material for foods, beverages, cosmetics, medicated cosmetics, pharmaceuticals, feeds, and pet-foods.

### INDUSTRIAL APPLICABILITY

As is evident from the above, the present invention relates to a method for producing a powdery composition retaining flavors and functions during a long preservation period by the steps of mixing a non-saccharide ingredient(s) and a base for powderization comprising a saccharide derivative(s) of α,α-trehalose as an effective ingredient(s) and powderizing the resulting mixture. Since a saccharide derivative(s) of α,α-trehalose is safe and extremely stable, it is useful as a base for powderization. The base for powderization can be used in various fields such as foods and beverages, cosmetics, medicated cosmetics, pharmaceuticals, commodities, feeds, pet-foods, sundries, product of chemical industries, etc. The present invention, having these outstanding functions and effects, is a significantly important invention that greatly contributes to this art.

## Claims

1. A method for powderizing a hydrophobic non-saccharide ingredient(s) comprising the steps of:
processing said hydrophobic non-saccharide ingredient(s) into a liquid or paste form by adding organic solvents;
mixing said hydrophobic non-saccharide ingredient(s) with a saccharide composition comprising saccharide-derivative(s) of α,α-trehalose, wherein said saccharide composition comprises α-maltosyl α,α-trehalose in a content of 30 w/w% or higher; and
powderizing the resulting mixture.

2. The method of claim 1, wherein the organic solvents are alcohols.

3. The method of claim 1 or claim 2, wherein said hydrophobic non-saccharide ingredient(s) is selected from the group consisting of processed stockbreedings, marine products or agricultural products; flavors, colorings, lipids, emulsifiers, functional substances, organic solvents, and agrichomical emulsions.

4. The method of any preceding claim, wherein said saccharide-derivative(s) of α,α-trehalose other than α-maltosyl α,α-trehalose is one constructed by binding mono-glucosyl or di-glucosyl residue with at least one glucosyl residue in α,α-trehalose molecule.

5. The method of any preceding claim, wherein said saccharide-derivative(s) of α,α-trehalose other than α-maltosyl α,α-trehalose is a saccharide having a trehalose structure as an end of the molecule.

6. The method of any preceding claim, wherein said saccharide-derivative(s) of α,α-trehalose is in an amorphous form.

7. The method of any preceding claim, wherein the amount of a saccharide-derivative(s) of α,α-trehalose in a powdery composition obtainable by the method is 5% (w/w) or higher to the total weight of the powdery composition, on a dry solid basis.

8. The method of any preceding claim, wherein said method for powderizing is a spray-drying method.

9. The method of any preceding claim, wherein said powdery composition obtainable by the method is one selected from the group consisting of foods, beverages, cosmetics, medicated cosmetics, pharmaceuticals, feeds, pet-foods, commodities, sundries, agrichemicals, and industrial chemicals, their materials and intermediates.

10. A powdery composition comprising a hydrophobic non-saccharide ingredient(s) produced by the method of any preceding claim.

## Patentansprüche

1. Verfahren zum Pulverisieren einer/von hydrophoben nicht aus Zucker bestehenden Komponente(n), das die Schritte aufweist:
Aufbereitung der hydrophoben nicht aus Zucker bestehenden Komponente(n) in eine flüssige oder pastöse Form durch Hinzufügen organischer Lösungsmittel;
Mischen der hydrophoben nicht aus Zucker bestehenden Komponente(n) mit einer Zuckermischung, die Zuckerabkömmling(e) aus α, α-Trehalose aufweist, wobei die Zuckermischung α-Maltosyl α, α-Trehalose mit einem Gehalt von 30 Gewichtsprozent oder höher aufweist; und
Pulverisieren der sich ergebenden Mischung.

2. Verfahren nach Anspruch 1, wobei die organischen Lösungsmittel Alkohole sind.

3. Verfahren nach Anspruch 1 oder Anspruch 2, wobei die hydrophobe(n) nicht aus Zucker bestehende(n) Komponente(n) ausgewählt wird/werden aus der Gruppe bestehend aus aufbereiteten Tierzüchtungen, marinen Produkten oder landwirtschaftlichen Produkten; Geschmacksstoffen, Farbstoffen, Lipiden, Emulgatoren, funktionalen Substanzen, organischen Lösungsmitteln, und Agrochemikalienemulsionen.

4. Verfahren nach einem der vorherigen Ansprüche, wobei der/die Zuckerabkömmling(e) aus α, α-Trehalose mit Ausnahme von α-Maltosyl α, α-Trehalose ausgebildet ist/sind durch Binden von Mono-Glucosyl- oder Di-Glucosyl-Rückstand mit zumindest einem Glucosyl-Rückstand in einem α, α-Trehalose-Molekül.

5. Verfahren nach einem der vorherigen Ansprüche, wobei der/die Zuckerabkömmling(e) aus α, α-Trehalose mit Ausnahme von α-Maltosyl α, α-Trehalose ein Zucker ist/Zucker sind, der/die als ein Ende des Moleküls eine Trehalose-struktur aufweist/aufweisen.

6. Verfahren nach einem der vorherigen Ansprüche, wobei der/die Zuckerabkömmling(e) aus α, α-Trehalose in einer amorphen Form vorliegt/vorliegen.

7. Verfahren nach einem der vorherigen Ansprüche, wobei die Menge an Zuckerabkömmling(en) aus α, α-Trehalose in einer durch das Verfahren erzielbaren pulverförmigen Mischung 5% (Gewichtsanteil) oder mehr an dem gesamten Gewicht der pulverförmigen Mischung auf einer trockenen festen Basis beträgt.

8. Verfahren nach einem der vorherigen Ansprüche, wobei das Verfahren zum Pulverisieren ein Sprüh-TrocknungsVerfahren ist.

9. Verfahren nach einem der vorherigen Ansprüche, wobei die durch das Verfahren erzielbare pulverförmige Mischung eine aus der Gruppe bestehend aus Lebensmitteln, Getränken, Kosmetika, medizinischer Kosmetika, Pharmazeutika, Futtermitteln, Haustierfuttermitteln, Verbrauchsgüter, Kleinteilen, Agrochemikalien, und industriellen Chemikalien, deren Rohstoffen und Zwischenprodukten, ausgewählte ist.

10. Pulverförmige Mischung, die eine/mehrere hydrophobe nicht aus Zucker bestehende Komponente(n) aufweist, die durch das Verfahren nach einem der vorherigen Ansprüche hergestellt ist/sind.

## Revendications

1. Procédé de pulvérisation d'un ou de plusieurs ingrédients hydrophobes non saccharidique(s) comprenant les étapes qui consistent :
à traiter ledit ou lesdits ingrédients sans saccharide sous forme de liquide ou de pâte en ajoutant des solvants organiques ;
à mélanger ledit ou lesdits ingrédients hydrophobes non saccharidique(s) avec une composition saccharidique comprenant un ou plusieurs dérivés saccharidiques de α,α-tréhalose, où ladite composition saccharidique comprend du α-maltosyl-α,α-tréhalose en une teneur de 30% en poids ou plus ; et
à pulvériser le mélange résultant.

2. Procédé de la revendication 1, dans lequel les solvants organiques sont des alcools.

3. Procédé de la revendication 1 ou 2, dans lequel ledit ou lesdits ingrédients hydrophobes non saccharidiques est/sont sélectionné(s) du groupe constitué de produits d'élevage, de produits de la mer ou de produits agricoles transformés ; d'arômes, de colorants, de lipides, d'émulsifiants, de substances fonctionnelles, de solvants organiques, et d'émulsions agrochimiques.

4. Procédé de l'une des revendications précédentes, dans lequel ledit ou lesdits dérivés saccharidiques de α,α-tréhalose autres que α-maltosyl-α,α-tréhalose est un dérivé élaboré en liant un résidu monoglucosyle ou di-glucosyle avec au moins un résidu glucosyle dans une molécule α,α-tréhalose.

5. Procédé de l'une des revendications précédentes, dans lequel ledit ou lesdits dérivés saccharidques de α,α-tréhalose autres que α-maltosyl-α,α-tréhalose est un saccharide ayant une structure de tréhalose en tant qu'extrémité de la molécule.

6. Procédé de l'une des revendications précédentes, dans lequel ledit ou lesdits dérivés saccharidiques de α,α-tréhalose est une forme amorphe.

7. Procédé de l'une des revendications précédentes, dans lequel la quantité du/des dérivé(s) saccharidiques de α,α-tréhalose dans une composition pulvérulente pouvant être obtenue par le procédé est de 5 % (en poids) ou plus du poids total de la composition pulvérulente, sur une base solide sèche.

8. Procédé de l'une des revendications précédentes, dans lequel ledit procédé de pulvérisation est un procédé de séchage par atomisation.

9. Procédé de l'une des revendications précédentes, dans lequel ladite composition pulvérulente pouvant être obtenue par le procédé est une composition sélectionnée du groupe constitué d'aliments, de boissons, de produits cosmétiques, de cosmétiques médicamenteux, de produits pharmaceutiques, de charges, d'aliments pour animaux, de marchandises, d'articles divers, de produits agrochimiques, et de produits chimiques industriels, leurs matériaux et produits intermédiaires.

10. Composition pulvérulente comprenant un ou plusieurs ingrédients hydrophobes non saccharidiques produits par le procédé de l'une des revendications précédentes.
